# EUROPEAN PATENT SPECIFICATION

(11) **EP 3 858 210 B1**
(45) Date of publication and mention of the grant of the patent: **05.03.2025**
(21) Application number: 18939361.4
(22) Date of filing: 09.11.2018
(51) Int. Cl.: A47L 11/24, A47L 11/40

(54) **SWEEPING ROBOT**
KEHRROBOTER
ROBOT DE BALAYAGE

(43) Date of publication of application: 04.08.2021
(73) Proprietor: Guangdong Midea White Home Appliance Technology Innovation Center Co., Ltd., Foshan, Guangdong 528311 (CN); Midea Group Co., Ltd., Foshan, Guangdong 528311 (CN)
(72) Inventor: YANG, Pin, Foshan, Guangdong 528311 (CN); CHENG, Jiefeng, Foshan, Guangdong 528311 (CN)
(74) Representative: Whitlock, Holly Elizabeth Ann
(86) International application number: PCT/CN2018/114875
(87) International publication number: WO 2020/093382

(56) References cited:
- EP-A1- 3 100 661
- CN-A- 108 158 512
- CN-U- 206 403 711
- CN-U- 207 384 214
- KR-A- 20130 020 062
- US-A1- 2015 020 326
- US-A1- 2018 263 447

## Description

### TECHNICAL FIELD

The present application relates to the technical field of sweeping robots, and in particular, to a sweeping robot.

### BACKGROUND

Sweeping robots usually use non-contact sensors, such as infrared sensors, odor sensors, and the like when detecting pet excrement. Since the sensors do not directly contact excrement, detection for excrement is inaccurate, which is not conducive for a sweeping machine to make accurate judgment for detection results. KR 20130020062A relates generally to a robotic cleaner provided to sense an obstacle by sensing the capacitance variation of an electrode planted in a sensor body arranged along an outer periphery of a main body.

### SUMMARY OF THE DISCLOSURE

A main purpose of the present application is to provide a sweeping robot, which is intended to improve accuracy of a sweeping robot for detecting dirt.

In order to achieve the above purpose, the present application provides a sweeping robot.

Aspects of the invention are set out in the claims.

In the technical solutions of the present application, during a moving process of a sweeping robot, when an object makes contact with a contact-type detection electrode and enters a detection area of the contact-type detection electrode, a capacitance, a resistance, or an impedance of the contact-type detection electrode changes, such that current in a detection circuit where it is located changes. According to the change of the capacitance, resistance, or impedance of the contact-type detection electrode, or the change of the current in the detection circuit, it is determined whether a currently detected object is diffusible dirt. Since the contact-type detection electrode contacts the object directly to perform detection, many factors affecting accuracy are avoided, such that accuracy of a detection result is greatly improved; thus, it is conducive to improve accuracy of the sweeping robot for detecting diffusible dirt, and is conducive for the sweeping robot to make more accurate judgement and operations. In addition, the contact-type detection electrode is located at a front side of the base plate, such that the contact -type detection electrode will make contact with diffusible dirt in advance; when the sweeping robot makes a response in time, the rear portion of the base plate, the driving wheels of the sweeping robot, and the like are avoided from contacting the diffusible dirt, diffusion of the dirt is avoided effectively, and the sweeping robot is avoided from being contaminated by the dirt to the greatest extent, it is conducive for cleanness of the sweeping robot.

### BRIEF DESCRIPTION OF THE DRAWINGS

In order to describe technical solutions in embodiments of the present application or in the prior art more clearly, drawings required being used in description of the embodiments or the prior art will be simply introduced below. Obviously, the drawings in the following description are merely some embodiments of the present application. For one of ordinary skill in the art, it is also possible to obtain other drawings according to structures shown in these drawings without paying any creative work.
FIG 1 is a structural schematic view of an embodiment of a sweeping robot of the present application.
FIG 2 is a partially enlarged view of the part A in FIG 1.
FIG 3 is a structural schematic view of anther embodiment of a sweeping robot of the present application.
FIG 4 is a structural schematic view of a contact-type detection electrode of a sweeping robot of the present application.

Introduction of reference numbers in the drawings:

| Reference number | Name | Reference number | Name |
|---|---|---|---|
| 100 | Base plate | 110 | Circumferential wall |
| 111 | Upper portion of circumferential wall | 112 | Tilted mounting surface |
| 120 | Bottom of base plate | 200 | Contact-type detection electrode |
| 211 | Upper positive electrode and upper negative electrode | 212 | Lower positive electrode and lower negative electrode |

Implementation, functional characteristics, and advantages of the purpose of the present application will be further described in accompany with the embodiments and with reference to the drawings.

### DETAILED DESCRIPTION

Technical solutions in embodiments of the present application will be described clearly and completely below in accompany with drawings in embodiments of the present application. Obviously, the described embodiments are merely some embodiments of the present application, but not all embodiments. Based on embodiments of the present application, all other embodiments obtained by one of ordinary skill in the art without paying any creative work belong to the protection scope of the present application.

It should be noted that all directional indications (such as up, down, left, right, front, back......) in embodiments of the present application are only used to explain relative position relationships, movement situations, and the like among components in a certain specific posture (e.g., as shown in the drawings). If the specific posture changes, the directional indications will change correspondingly.

In addition, the descriptions related to "first", "second", and the like in the present application are only used for descriptive purposes, and cannot be understood as indicating or implying their relative importance or implicitly indicating the number of indicated technical features. Therefore, the features defined with "first" or "second" may explicitly or implicitly include at least one such feature. At the same time, "and/or" appearing in the full text means that it includes three schemes, taking "A and/or B" as an example, including a scheme A, a scheme B, or a scheme that meets both A and B. In addition, technical solutions of various embodiments can be combined with each other, but it must be based on what can be achieved by one of ordinary skill in the art. When a combination of technical solutions is contradictory or cannot be achieved, it should be considered that such a combination of technical solutions does not exist, and does not fall within the scope of protection required by the present application.

The present application mainly provides a sweeping robot, the sweeping robot is a moveable cleaning device (having both detecting and cleaning functions). The sweeping robot has a contact-type detection electrode, the contact-type detection electrode has a detection area. In response to the contact-type detection electrode making contact with diffusible dirt, one of a resistance, a capacitance, and an impedance of the contact-type detection electrode changes, such that current in a detection circuit of the sweeping robot changes. According to the change of the resistance, capacitance, or impedance of the contact-type detection electrode, or the change of the current in the detection circuit, a control circuit of the sweeping robot triggers an indication device of the sweeping robot. The indication device can send an alarm to outside by one or more of lamp light, sound, and vibration. Of course, in some embodiments, the indication device can further send a signal to a specified terminal so as to send indication through the terminal.

It is worth noting that diffusible dirt usually has certain humidity and viscosity, and is prone to diffuse along with carriers. For example, animal excrement, melted candy, liquid (such as water), flowable medium (such as tomato sauce, soup, etc.), and so on.

A specific structure of a sweeping robot will be mainly described below.

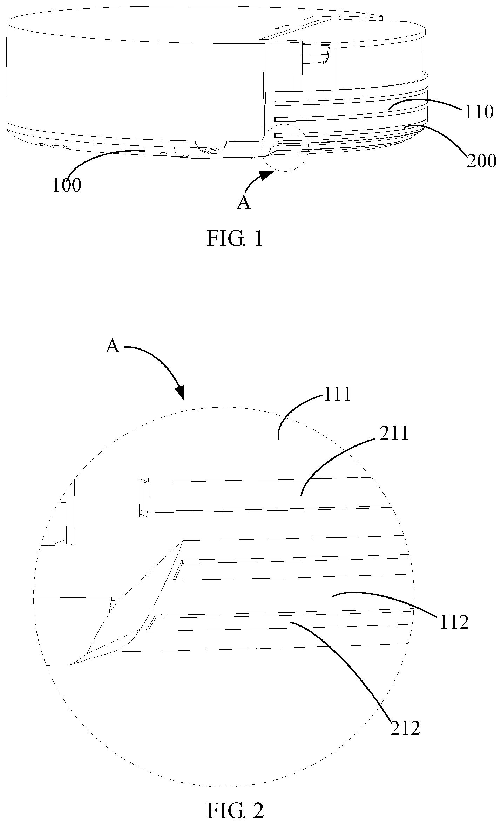

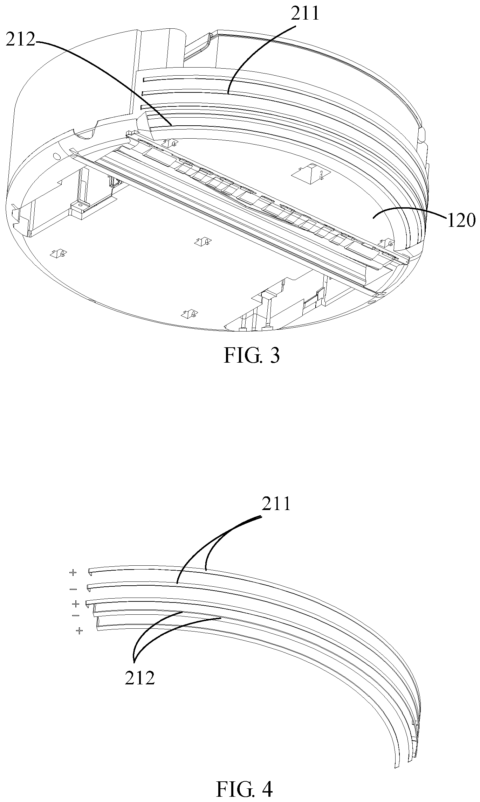

Referring to FIG 1 to FIG 4, in embodiments of the present application, a sweeping robot is used to detect or sweep waste. The sweeping robot has a mobile device body including an electric drive device. The electric drive device can be a motor, an electrically driven hydraulic pump, a pneumatic pump, or an electromagnetic induction drive device, etc., all devices driven by electricity are available. The sweeping robot further includes a contact-type detection electrode, the contact-type detection electrode is mounted on the mobile device body. In response to the contact-type detection electrode contacting diffusible dirt, a resistance, a capacitance, or an impedance of the contact-type detection electrode will change.

Wherein, the mobile device body includes a base plate 100 and driving wheels. The driving wheels are disposed at the bottom of the base plate 100 and are rotatably connected with the base plate 100. The electric driving device is connected with the driving wheels to make the driving wheels roll. The electric drive device is connected to the base plate 100. Wherein, the contact-type detection electrode is mounted on a front portion of the base plate 100. The base plate 100 can have many kinds of shapes, such as polygonal, elliptical, circular, etc. In the case of the same volume, in order to allow the sweeping robot to enter a narrower space, the base plate 100 is set to be circular. In order to prevent external environmental factors from affecting the rolling of the driving wheels, a first baffle is disposed on a side of an axial direction of a driving wheel, and a second baffle is disposed on the top of the driving wheel. A roller brush for cleaning ground dust and other debris is mounted on the base plate 100, and the roller brush is driven by a motor. In this embodiment, a side brush is further disposed on the base plate 100, and the side brush extends from the base plate 100 outside the base plate 100 to expand the cleaning range of the sweeping robot, thereby improving the cleaning efficiency.

In this embodiment, during a moving process of a sweeping robot, when an object makes contact with a contact-type detection electrode and enters a detection area of the contact-type detection electrode, a capacitance, a resistance, or an impedance of the contact-type detection electrode changes, such that current in a detection circuit where it is located changes. According to the change of the capacitance, resistance, or impedance of the contact-type detection electrode, or the change of the current in the detection circuit, it is determined whether a currently detected object is diffusible dirt. Since the contact-type detection electrode contacts the object directly to perform detection, many factors affecting accuracy are avoided, such that accuracy of a detection result is greatly improved; thus, it is conducive to improve accuracy of the sweeping robot for detecting diffusible dirt, and is conducive for the sweeping robot to make more accurate judgement and operations. In addition, the contact-type detection electrode is located at a front side of the base plate 100, such that the contact -type detection electrode will make contact with diffusible dirt in advance; when the sweeping robot makes a response in time, the rear portion of the base plate 100, the driving wheels of the sweeping robot, and the like are avoided from contacting the diffusible dirt, diffusion of the dirt is avoided effectively, and the sweeping robot is avoided from being contaminated by the dirt to the greatest extent, it is conducive for cleanness of the sweeping robot.

It is worth noting that judging whether the currently detected object is a diffusible dirt according to the capacitance, the resistance, the impedance, or the current can be achieved by a comparison circuit. For example, a preset capacitance is set, when a detected capacitance is greater than or equal to the preset capacitance, the current object is judged as diffusible dirt; when the detected capacitance is less than the preset capacitance, the current object is judged as non-diffusible dirt. It can also be achieved by software, for example, a detected capacitance can be compared with a capacitance value pre-stored in a memory of the sweeping robot, different stored capacitance values correspond to different types of objects. Of course, one or more of the types is diffusible dirt.

There are many positions where the contact-type detection electrode can be mounted on the front portion of the base plate 100, and there are also many mounting situations. The following describes separate arrangements on a vertical surface and a bottom surface of a front side of the base plate 100 and an arrangement on both.

When being separately arranged on the bottom surface of the base plate 100, the contact-type detection electrode is arranged in a strip shape, and the contact-type detection electrode extends along the bottom of the front portion of the base plate 100. The contact-type detection electrode includes a positive electrode and a negative electrode, and the positive electrode and the negative electrode extend along a bottom surface of the base plate 100. In order to contact diffusible dirt as soon as possible, the contact-type detection electrode extends along an edge of a front side of the base plate 100. When the base plate 100 is arranged as a circular shape, the contact-type detection electrode is arranged in an arc shape on the ground. The positive and negative electrodes are arranged alternately along a radial direction, and a detection area is formed between adjacent positive and negative electrodes. The numbers of positive and negative electrodes may be unequal. Both a positive electrode in front and a negative electrode in front are possible. The detection area is parallel to the bottom surface of the base plate 100. By this arrangement, a plurality of detection areas extending along a front edge of the base plate 100 will be formed on the front side of the base plate 100, which facilitates efficient, comprehensive and accurate detection for diffusible dirt.

When being separately arranged on the circumferential wall 110 (vertical surface) of the front portion of the base plate 100, the contact-type detection electrode is arranged in a strip shape, and the contact-type detection electrode extends along the circumferential wall 110 of the front portion of the base plate 100. The positive electrodes and the negative electrodes of the contact-type detection electrode extend along a circumferential direction of the circumferential wall 110, and are arranged along a height direction of the circumferential wall 110. Similarly, a detection area is formed between adjacent positive and negative electrodes, and the detection area is perpendicular to the bottom surface of the base plate 100. The numbers of positive and negative electrodes may be unequal. Both a positive electrode located above and a negative electrode located above are possible. By this arrangement, a plurality of detection areas extending along a front edge of the base plate 100 will be formed on the front side of the base plate 100, which facilitates efficient, comprehensive and accurate detection for diffusible dirt in a vertical direction.

In some embodiments, in order to improve a detection accuracy in a vertical direction, a front circumferential wall 110 of the base plate 100 has a tilted mounting surface 112, and the tilted mounting surface 112 tilts backwards from top to bottom; the contact-type detection electrode is mounted on the tilted mounting surface 112. By the arrangement of the tilted surface, a usable area of electrodes arranged in a vertical direction is increased, this is conducive to increase the number of electrodes in this area, thereby achieving the purpose of increasing a detection area; at the same time, by the arrangement of the tilted surface, when dirt enters the area (the area enclosed between the tilted surface and the ground), it can enter the detection area of the contact-type detection electrode as much as possible, this is conducive to improve the detection efficiency and accuracy.

In some embodiments, in order to accurately detect dirt conditions at various heights in a vertical plane, the tilted mounting surface 112 is located at a position on the circumferential wall 110 at the front portion of the base plate 100 which is close to the bottom of the base plate 100. By arranging the tilted mounting surface on the bottom of the circumferential wall 110 of the base plate 100, it is conducive to detect small-sized dirt more accurately; at the same time, when the bottom surface is also provided with electrodes, detection areas of a vertical surface and the bottom surface of the base plate 100 become continuous, so that a detection accuracy at the junction between the circumferential wall 110 and the bottom surface of the base plate 100 is further improved.

It is worth noting that there are multiple detection electrodes on the circumferential wall 110, and a distance between a positive electrode and a negative electrode 211 on an upper portion 111 of the circumferential wall is greater than a distance between a lower positive electrode and a lower negative electrode 212 on a lower portion 112 of the circumferential wall. By this arrangement, the upper portion can detect large-sized dirt, and the lower portion can detect small-sized dirt. It is conducive to improve a detection accuracy.

It is worth noting that the contact-type detection electrode can have many shapes. When it is arranged in a strip shape, it can directly extend along an extension direction of the bottom of the front side or the side wall of the base plate. Of course, it can also be formed by splicing a plurality of contact-type detection electrodes. In some embodiments, the shape of the contact-type detection electrode may not be a long strip (maybe in a ring shape, etc.). In this case, a plurality of contact-type detection electrodes are arranged along the bottom of the front side or the front side wall of the base plate so as to ensure that the bottom and the front side wall of the base plate can detect dirt.

In order to improve the comprehensiveness of detecting dirt, the detection electrode includes a first detection electrode located at the bottom of the front side of the base plate 100, and a second detection electrode located on the circumferential wall 110 of the front portion of the base plate 100; the first detection electrode is arranged along the bottom of the base plate 100, and the second detection electrode is arranged along a height direction of the base plate 100. By disposing contact-type detection electrodes on both the bottom of the front side and the circumferential wall 110 of the base plate 100, the sweeping robot is enabled to simultaneously detect dirt in a vertical direction and a horizontal direction of the base plate 100 during a working process, which greatly improves a detection range and a detection accuracy of the sweeping robot.

In this embodiment, the first detection electrode includes a first positive electrode and a first negative electrode; the second detection electrode includes a second positive electrode and a second negative electrode; a distance between the first positive electrode and the first negative electrode is smaller than a distance between the second positive electrode and the second negative electrode. A distance between a contact-type detection electrode located at the bottom of the base plate 100 and the ground is smaller than a distance between an electrode located on the circumferential wall 110 of the base plate 100 and the ground. Large-sized dirt will usually be detected by the second detection electrode on the circumferential wall 110 of the base plate 100, while small-sized dirt is difficult to be detected by the second detection electrode, and needs to be specially detected by the first detection electrode. In this way, by setting the distance between the second positive electrode and the second negative electrode to be greater than the distance between the first positive electrode and the first negative electrode, it is conducive for detection electrodes at different positions to carry out a reasonable division of labor and cooperation, and thus accurately and comprehensively detect dirt of different sizes together. This is conducive to improve the detection accuracy of the sweeping robot.

Regarding the numbers and arrangements of the first positive electrode, the first negative electrode, the second positive electrode, and the second negative electrode, the number of the first positive electrode and/or the first negative electrode is plural, and the first positive electrode and the first negative electrode are arranged alternately; and/or the number of the second positive electrode and/or the second negative electrode is plural, and the second positive electrode and the second negative electrode are arranged alternately.

In this embodiment, in order to further improve efficiency and accuracy of the detection electrodes, in adjacent ones of the first detection electrode and the second detection electrode, the first positive electrode is arranged to be adjacent to the second negative electrode, or the first negative electrode is arranged to be adjacent to the second positive electrode. This arrangement avoids formation of a blind zone at the junction of the first detection electrode and the second detection electrode, so that a detection area of the first detection electrode and a detection area of the second detection electrode are organically coupled, which greatly improves the detection accuracy of the cleaning robot.

Regarding the connection manner between the contact-type detection electrode and the base plate 100, there can be many ways, such as connections by means of snaps, screws, glue, etc. In this embodiment, that the contact-type detection electrode is inserted in the base plate 100 is described as an example. The contact-type detection electrode is arranged in a strip sheet shape, two ends of the contact-type detection electrode are bent to form mounting portions, the base plate 100 is provided with an insertion slot, and the mounting portions are inserted in the insertion slot. The electrodes located on the bottom surface of the base plate 100 are attached to the bottom surface, and the electrodes located on the circumferential wall 110 of the base plate 100 are attached to the circumferential wall 110. In order to simplify the processing technology for the electrodes, an opening of the insertion slot on the bottom surface of the base plate 100 is vertically downward, and an opening of the insertion slot on the circumferential wall 110 of the base plate 100 is perpendicular to the circumferential wall 110 and outward (along a radial direction of the base plate 100). In this way, when the electrode is bent, it can be bent along its length direction, this is very convenient.

In some embodiments, in order to protect the contact-type detection electrode from being damaged during a working process, the bottom or the circumferential wall 110 of the base plate 100 defines a mounting groove, the contact-type detection electrode is mounted in the mounting groove, such that an outer surface of the contact-type detection electrode is flush with the bottom or the circumferential wall 110 of the base plate 100.

The mounting groove is defined on the base plate 100, and the mounting groove recesses inwards the base plate 100. When the contact-type detection electrode is mounted in the mounting groove, a side of the contact-type detection electrode being away from the base plate 100 (a side facing the ground or air) is flush with a groove edge of the mounting groove. In this way, the electrode is hidden in the mounting groove; during a use process of the sweeping robot, external objects are difficult to contact the electrode from a non-detection area side thereof, thereby avoiding damage.

## Claims

1. A sweeping robot comprising:
a base plate (100); and
a contact-type detection electrode; wherein the contact-type detection electrode is mounted at a front portion of the base plate (100); in response to the contact-type detection electrode making contact with diffusible dirt, at least one of a resistance, a capacitance or an impedance of the contact-type detection electrode changes;
wherein the contact-type detection electrode extends or is arranged along a circumferential wall (110) of the front portion of the base plate (100);
wherein the circumferential wall (110) of the front portion of the base plate (100) has a tilted mounting surface (112), the tilted mounting surface (112) tilts backwards from top to bottom and the contact-type detection electrode is mounted on the tilted mounting surface (112);
**characterised in that** the number of the contact-type detection electrode on the circumferential wall (110) is plural, and a distance between an upper positive electrode (211) and an upper negative electrode (211) of a contact-type detection electrode at an upper portion (111) of the circumferential wall (110) is larger than a distance between a lower positive electrode (212) and a lower negative electrode (212) on the tilted mounting surface (112).

2. The sweeping robot according to claim 1, wherein the contact-type detection electrode extends or is arranged along a bottom of the front portion of the base plate.

3. The sweeping robot according to claim 1 or 2, wherein the tilted mounting surface (112) is located at a position on the circumferential wall (110) of the front portion of the base plate (100) close to a bottom (120) of the base plate (100).

4. The sweeping robot according to any one of claims 1-3, wherein the detection electrode comprises a first detection electrode located at a bottom of a front side of the base plate (100), and a second detection electrode located at a circumferential wall (110) of a front portion of the base plate (100); the first detection electrode is arranged along a bottom of the base plate (100), and the second detection electrode is arranged along a height direction of the base plate (100).

5. The sweeping robot according to claim 4, wherein the first detection electrode comprises a first positive electrode and a first negative electrode; the second detection electrode comprises a second positive electrode and a second negative electrode; a distance between the first positive electrode and the first negative electrode is less than a distance between the second positive electrode and the second negative electrode.

6. The sweeping robot according to claim 5, wherein the number of the first positive electrode and/or the first negative electrode is plural, and the first positive electrode and the first negative electrode are arranged alternately; and/or
the number of the second positive electrode and/or the second negative electrode is plural, and the second positive electrode and the second negative electrode are arranged alternately.

7. The sweeping robot according to claim 6, wherein in adjacent ones of the first detection electrode and the second detection electrode, the first positive electrode is arranged to be adjacent to the second negative electrode, or the first negative electrode is arranged to be adjacent to the second positive electrode.

8. The sweeping robot according to any one of claims 1-7, wherein the contact-type detection electrode is disposed to be bar-shaped, two ends of the contact-type detection electrode are bent to form mounting portions, the base plate (100) defines an insertion slot, and the mounting portions are inserted in the insertion slot.

9. The sweeping robot according to any one of claims 1-8, wherein a bottom or a circumferential wall (110) of the base plate (100) defines a mounting groove, the contact-type detection electrode is mounted in the mounting groove, such that an outer surface of the contact-type detection electrode is flush with the bottom or the circumferential wall (110) of the base plate (100).

## Patentansprüche

1. Kehrroboter, umfassend:
eine Grundplatte (100); und
eine Kontaktdetektionselektrode; wobei die Kontaktdetektionselektrode an einem vorderen Abschnitt der Grundplatte (100) angebracht ist; wobei als Reaktion darauf, dass die Kontaktdetektionselektrode mit diffusionsfähigem Schmutz in Kontakt kommt, sich mindestens eines von einem Widerstand, einer Kapazität oder einer Impedanz der Kontaktdetektionselektrode ändert;
wobei sich die Kontaktdetektionselektrode entlang einer umlaufenden Wand (110) des vorderen Abschnitts der Grundplatte (100) erstreckt oder daran entlang angeordnet ist;
wobei die umlaufende Wand (110) des vorderen Abschnitts der Grundplatte (100) eine geneigte Anbaufläche (112) aufweist, wobei die geneigte Anbaufläche (112) von oben nach unten nach hinten geneigt ist und die Kontaktdetektionselektrode auf der geneigten Anbaufläche (112) angebracht ist;
**dadurch gekennzeichnet, dass** die Anzahl der Kontaktdetektionselektrode auf der umlaufenden Wand (110) eine Mehrzahl ist und ein Abstand zwischen einer oberen positiven Elektrode (211) und einer oberen negativen Elektrode (211) einer Kontaktdetektionselektrode an einem oberen Abschnitt (111) der umlaufenden Wand (110) größer als ein Abstand zwischen einer unteren positiven Elektrode (212) und einer unteren negativen Elektrode (212) auf der geneigten Anbaufläche (112) ist.

2. Kehrroboter nach Anspruch 1, wobei sich die Kontaktdetektionselektrode entlang einer Unterseite des vorderen Abschnitts der Grundplatte erstreckt oder daran entlang angeordnet ist.

3. Kehrroboter nach Anspruch 1 oder 2, wobei sich die geneigte Anbaufläche (112) an einer Stelle an der umlaufenden Wand (110) des vorderen Abschnitts der Grundplatte (100) nah bei einer Unterseite (120) der Grundplatte (100) befindet.

4. Kehrroboter nach einem der Ansprüche 1-3, wobei die Detektionselektrode eine erste Detektionselektrode, die sich unten an einer Vorderseite der Grundplatte (100) befindet, und eine zweite Detektionselektrode, die sich an einer umlaufenden Wand (110) eines vorderen Abschnitts der Grundplatte (100) befindet, umfasst; wobei die erste Detektionselektrode entlang einer Unterseite der Grundplatte (100) angeordnet ist und die zweite Detektionselektrode entlang einer Höhenrichtung der Grundplatte (100) angeordnet ist.

5. Kehrroboter nach Anspruch 4, wobei die erste Detektionselektrode eine erste positive Elektrode und eine erste negative Elektrode umfasst; wobei die zweite Detektionselektrode eine zweite positive Elektrode und eine zweite negative Elektrode umfasst; wobei ein Abstand zwischen der ersten positiven Elektrode und der ersten negativen Elektrode kleiner als ein Abstand zwischen der zweiten positiven Elektrode und der zweiten negativen Elektrode ist.

6. Kehrroboter nach Anspruch 5, wobei die Anzahl der ersten positiven Elektrode und/oder der ersten negativen Elektrode eine Mehrzahl ist und die erste positive Elektrode und die erste negative Elektrode abwechselnd angeordnet sind; und/oder
wobei die Anzahl der zweiten positiven Elektrode und/oder der zweiten negativen Elektrode eine Mehrzahl ist und die zweite positive Elektrode und die zweite negative Elektrode abwechselnd angeordnet sind.

7. Kehrroboter nach Anspruch 6, wobei in benachbarten der ersten Detektionselektrode und der zweiten Detektionselektrode die erste positive Elektrode angeordnet ist, um der zweiten negativen Elektrode benachbart zu sein, oder die erste negative Elektrode angeordnet ist, um der zweiten positiven Elektrode benachbart zu sein.

8. Kehrroboter nach einem der Ansprüche 1-7, wobei die Kontaktdetektionselektrode angeordnet ist, um leistenförmig zu sein, wobei zwei Enden der Kontaktdetektionselektrode gebogen sind, um Anbauabschnitte zu bilden, wobei die Grundplatte (100) einen Einsteckschlitz definiert und die Anbauabschnitte in den Einsteckschlitz eingesteckt sind.

9. Kehrroboter nach einem der Ansprüche 1-8, wobei eine Unterseite oder eine umlaufende Wand (110) der Grundplatte (100) eine Anbaunut definiert, wobei die Kontaktdetektionselektrode derart in der Anbaunut angebracht ist, dass eine Außenoberfläche der Kontaktdetektionselektrode mit der Unterseite oder der umlaufenden Wand (110) der Grundplatte (100) bündig ist.

## Revendications

1. Robot de balayage comportant :
une plaque de base (100) ; et
une électrode de détection de type à contact ; dans lequel l'électrode de détection de type à contact est montée au niveau d'une partie avant de la plaque de base (100) ; en réponse au fait que l'électrode de détection de type à contact entre en contact avec des saletés diffusibles, au moins l'une parmi une résistance, une capacité ou une impédance de l'électrode de détection de type à contact change ;
dans lequel l'électrode de détection de type à contact s'étend ou est agencée le long d'une paroi circonférentielle (110) de la partie avant de la plaque de base (100) ;
dans lequel la paroi circonférentielle (110) de la partie avant de la plaque de base (100) a une surface de montage inclinée (112), la surface de montage inclinée (112) s'incline vers l'arrière de haut en bas et l'électrode de détection de type à contact est montée sur la surface de montage inclinée (112) ;
**caractérisé en ce que** le nombre d'électrodes de détection de type à contact sur la paroi circonférentielle (110) est un nombre multiple, et une distance entre une électrode positive supérieure (211) et une électrode négative supérieure (211) d'une électrode de détection de type à contact au niveau d'une partie supérieure (111) de la paroi circonférentielle (110) est supérieure à une distance entre une électrode positive inférieure (212) et une électrode négative inférieure (212) sur la surface de montage inclinée (112).

2. Robot de balayage selon la revendication 1, dans lequel l'électrode de détection de type à contact s'étend ou est agencée le long d'une partie inférieure de la partie avant de la plaque de base.

3. Robot de balayage selon la revendication 1 ou la revendication 2, dans lequel la surface de montage inclinée (112) est située au niveau d'une position sur la paroi circonférentielle (110) de la partie avant de la plaque de base (100) à proximité d'une partie inférieure (120) de la plaque de base (100).

4. Robot de balayage selon l'une quelconque des revendications 1 à 3, dans lequel l'électrode de détection comporte une première électrode de détection située au niveau d'une partie inférieure d'un côté avant de la plaque de base (100), et une deuxième électrode de détection située au niveau d'une paroi circonférentielle (110) d'une partie avant de la plaque de base (100) ; la première électrode de détection est agencée le long d'une partie inférieure de la plaque de base (100), et la deuxième électrode de détection est agencée le long d'une direction allant dans le sens de la hauteur de la plaque de base (100).

5. Robot de balayage selon la revendication 4, dans lequel la première électrode de détection comporte une première électrode positive et une première électrode négative ; la deuxième électrode de détection comporte une deuxième électrode positive et une deuxième électrode négative ; une distance entre la première électrode positive et la première électrode négative est inférieure à une distance entre la deuxième électrode positive et la deuxième électrode négative.

6. Robot de balayage selon la revendication 5, dans lequel le nombre de la première électrode positive et/ou de la première électrode négative est un nombre multiple, et la première électrode positive et la première électrode négative sont agencées de façon alternée ; et/ou
le nombre de la deuxième électrode positive et/ou de la deuxième électrode négative est un nombre multiple, et la deuxième électrode positive et la deuxième électrode négative sont agencées de façon alternée.

7. Robot de balayage selon la revendication 6, dans lequel, dans des électrodes adjacentes parmi la première électrode de détection et la deuxième électrode de détection, la première électrode positive est agencée de manière à être adjacente à la deuxième électrode négative, ou la première électrode négative est agencée de manière à être adjacente à la deuxième électrode positive.

8. Robot de balayage selon l'une quelconque des revendications 1 à 7, dans lequel l'électrode de détection du type à contact est disposée pour être en forme de barre, les deux extrémités de l'électrode de détection de type à contact sont pliées pour former des parties de montage, la plaque de base (100) définit une fente d'insertion, et les parties de montage sont insérées dans la fente d'insertion.

9. Robot de balayage selon l'une quelconque des revendications 1 à 8, dans lequel une partie inférieure ou une paroi circonférentielle (110) de la plaque de base (100) définit une rainure de montage, l'électrode de détection de type à contact est montée dans la rainure de montage, de telle sorte qu'une surface extérieure de l'électrode de détection de type à contact est au même niveau que la partie inférieure ou la paroi circonférentielle (110) de la plaque de base (100).
